# EUROPEAN PATENT SPECIFICATION

(11) **EP 0 580 557 B1**
(45) Date of publication and mention of the grant of the patent: **30.08.1995**
(21) Application number: 93830112.4
(22) Date of filing: 22.03.1993
(51) Int. Cl.: C23C 28/00, B05D 5/08, A47J 36/02

(54) **A process for realizing a non-stick covering on a metallic or other underlayer, in the manufacture of kitchenware for cooking foods and the product thus obtained**
Verfahren zur Herstellung eines nichthaftenden Belages auf einem metallischen oder anderen Untergrund im Zuge der Herstellung von Küchengeräten zur Zubereitung von Speisen und das durch das Verfahren hergestellte Produkt
Procédé pour la formation d'un revêtement non-collant sur une sous-couche métallique ou non-métallique dans la fabrication d'ustensiles de cuisine destinés à la cuisson d'aliments ainsi que le produit ainsi obtenu

(30) Priority: 24.07.1992 IT RM920567
(43) Date of publication of application: 26.01.1994
(73) Proprietor: PENSOFAL S.p.A., I-80132 Napoli (IT)
(72) Inventor: Sollo, Giovanni, c/o PENSOFAL S.p.A., I-80132 Napoli (IT)
(74) Representative: Lanzoni, Luciano

(56) References cited:
- EP-A- 0 117 801
- EP-A- 0 206 121
- EP-A- 0 349 804
- EP-A- 0 433 872
- US-A- 5 037 675

## Description

The invention relates to a process for realising a non-stick covering on a metallic underlayer, generally in steel or aluminium, or in other material, in the manufacture of kitchenware pans for cooking foods and to the product thus obtained.

Prior art non-stick coverings are obtained by means of application, generally by spraying or rolling of a single layer of non-stick material, followed by firing at temperatures, normally around 400-500 degrees for a firing time normally comprised between 5 and 6 minutes, according to the specifications of the supplier of the said material. Temperatures and times may vary inversely and proportionately up until the required chemical-physical characteristics are required and the legal norms regarding the qualification of products to be used in connection with foodstuffs are satisfied.

Present processes in use in the realising of non-stick coverings on a metallic or other underlayer in making kitchenware, pans, skillets the like, are essentially of two types: rolling or spraying. Essentially, the rolling process envisages the following phases:
- preparation of a disc from a sheet of steel, or another shape depending on the pan or skillet to be made;
- pickling of the said disc;
- roll-application of a continuous layer of non-stick material on the surface of the said underlayer destined to come into contact with the food;
- firing of the non-stick material at approximately 420 degrees for about 5 to 6 minutes (values are variable as mentioned above);
- external finishing operation, viz: rolling of the lateral edges, handle attachment, enamelling and any further firing subsequent to the external silk-screening and enamelling operations;
- pressing or drawing to shape the disc.

The spraying process envisages the following operations:
- pressing or drawing to shape a pan or skillet starting from a sheet metal disc or other shape according to the requirements of the finished piece;
- pickling/degreasing of the part-finished product obtained;
- sandblasting of the said part-finished product;
- spray-application of a continuous layer of non-stick material on the internal surface of the pan destined to come into contact with foodstuffs;
- firing of the non-stick material in the above-described conditions;
- finishing operations as described above.

The non-stick material layers, independently of the procedure used, usually have a thickness varying between 8-9 »m and 25-30 »m, though it is normal also to have thicknesses of between 5 and 50 »m., as the quality of the kitchenware increases, while lesser thicknesses are inefficient and greater thicknesses cause difficulties in manufacturing techniques, in that they give rise to microfractures in the folding areas during the pressing of already-rolled discs, and cause problems of spraying uniformity.

However, even with better quality kitchenware, there is the drawback of inadvertent scratching of the non-stick layer due to cutting with kitchen knives or other pointed utensils, leading to the loss of the non-stick characteristics and the inevitable deterioration in the pan's aesthetic qualities.

The internal bottom surface of some prior art pans is not smooth and uniform due to projections or other thickness variations. These projections and the like, normally made by pressing or other plastic working of the metallic underlayer, are functional in the cooking of some types of foods and increase the non-stick characteristics of the surface, while they are not able to avoid incisions or scratches caused by blades or other utensils, or prevent their formation by creating a discontinuity in the trajectories of the said blades or other utensils, and exhibit an non-stick covering of uniform thickness according to the above-mentioned average values.

An aim of the present invention is to obviate the above-mentioned drawbacks, by providing a process and a product made according to the process wherein, on the bottom surface of the kitchenware destined to come into contact with the food to be cooked, a relief-pattern is obtained by means of a non-constant and discontinuous thickness of non-stick material applied on a flat and uniform metallic (or the like) underlayer .

A further aim of the invention is to realise a pan, skillet or similar kitchenware item equipped with a non-stick covering with at least areas of thickness which are considerably greater than the normal thicknesses in use today.

A still further aim of the invention is to realise an internal bottom surface of the pan or the like which is destined to come into contact with the food, which is discontinuous with projections and reliefs originating from variations in the thickness of the non-stick material, which variations offer greater resistance to accidental incisions and scratches on the part of blades or other utensils, or prevents their formation, by creating a considerable discontinuity in the trajectory of the said blades or utensils.

Thus the invention, as it is characterised in the claims that follow, solves the problem of realising a process for obtaining a non-stick covering on a metallic or other underlayer in the manufacture of kitchenware for the cooking of foodstuffs, which is characterised in that it comprises the following steps:
- application of a first, continuous layer of uniform thickness of non-stick material over all of the surface of the said underlayer destined to come into contact with the food;
- partial firing of the said first continuous layer at a temperature and for a duration which permit the subsequent attachment and reticular integration of a second non-continuous layer of non-stick material to the first continuous layer;
- application of a second non-continuous layer of non-stick material on the said first continuous layer, at least limited to the central flat and uniform area constituting the bottom of a pan;
- a final firing of the non-stick covering layers.

A product obtained by the process according to the invention is characterised in that the product thus obtained is constituted by a metallic or other underlayer, pan- or skillet-conformed or having a different shape, exhibits a flat and uniform internal bottom surface destined to come into contact with food, which bottom is covered with discontinuously-developing non-stick material according to zones of greater thickness and zones of lesser thickness arranged according to a predetermined pattern.

The principal advantages obtained with the present invention consist essentially in the fact that the said layers are applied, according to known processes, by rolling or spraying, to the bottom surfaces which are either already plastically deformed or are destined to be successively deformed by pressing or drawing, but not leading to any considerable increase in production costs; an evident increase in the quality and durability of the kitchenware is obtained, however, because of the increase in the thickness in the non-stick material and also due to the greater non-stick effect obtained by the discontinuous surface.

Further characteristics and advantages of the present invention will better emerge from the detailed description that follows, of a preferred but non-exclusive process being a modification of the two known methods, for making a pan, skillet or similar kitchenware object. It is obvious that the process may be applied, using the methods known to persons skilled in the technical field, on other pans and skillets made in metals other than steel or aluminium, or even in completely different materials, such as ceramic. For the sake of descriptive simplicity, herein reference will be made to a pan obtained from a metallic underlayer, preferably steel or aluminium.

The invention is described more in detail in the following specification with the help of drawings representing an illustrative example and an embodiment which is purely in the form of a non-limiting example.

Figure 1 shows a schematic view from above of a pan made according to the invention.

Figure 2 shows a schematic partial section of the pan of figure 1, where obviously the dimensional relationships amongst the parts do not correspond to reality due to illustrative requirements.

With reference to the accompanying drawings, for the realisation of a non-stick covering on a metallic underlayer 3 in the manufacture of kitchenware according to the present invention, applied to a first realisation of a pan 1, according to the rolling process, the phases are substantially as follows:
- preparation of a disc or other form from a sheet of steel according to the pan 1 to be realised;
- pickling of the said disc
- roll-application of a continuous layer 2 of non-stick material on the surface of the said underlayer 3 destined to come into contact with the food;
- partial firing of the said first continous layer, at a temperature preferably of about 390-400 degrees and for a duration which is sufficient to permit the subsequent attachment and molecular integration of a second non-continuous layer 4 of non-stick material to the said first layer 2;
- application, advantageously by means of silk-screening, of a second, non-continuous layer 4 of non-stick material on the said first continuous layer 2, at least limitedly to the central flat and uniform area constituting the bottom of a pan 1 according to a predetermined pattern, regular or irregular;
- a final firing of the non-stick coverings 2 and 4 applied at a temperature of preferably 420/440 degrees for a duration of five minutes, according to the specifications provided by the producer of the said non-stick material concerning the attainment of the required chemical-physical characteristics as well as the norms according to the law for the qualification of a product which is to be used in contact with foodstuffs;
- finishing, such as rolling of the edges, silk-screening of the edge and/or of the external bottom, attachment of the handle, enamelling, etc., according to existing techniques;
- pressing or drawing of the disc into a pan-shape.

In order to realise a non-stick covering on a metallic underlayer 6, in the manufacture of kitchenware according to the present invention, applied to a second applicative form of a pan 1, according to the spraying process, the phases are substantially as follows:
- pressing or drawing of a pan starting from a disc or other shape of sheet steel according to the pan 1 shape desired;
- pickling/degreasing of the part-finished product;
- sand-blasting of the said part finished product in order to enhance the sprayed non-stick material adhesion;
- internal spray-application of a first continuous layer 2 of non-stick material to the said underlayer 3, in particular the internal part destined to come into contact with food;

and according to the invention, as in the preceding case:
- partial firing of the said first continuous layer 2;
- application of a second, non-continuous layer 4 of non-stick material on the said first continuous layer 2 at least limitedly to the said flat and uniform central area constituting the bottom of the pan 1;
- final firing of the layers 2 and 4 of applied non-stick material;
- final finishing operations.

In both above-described forms of realisation, the first continuous layer 2 is of a thickness which is preferably comprised between 5 and 50 »m., at least between 20 and 30 »m. for a quality product, and the second, non-continuous layer is of a thickness advantageously comprised between 5 and 50 »m.

The non-stick material constituting the two layers 2 and 4 can be the same or different (but obviously compatible) with regard to chemical-physical characteristics, but preferably the material for the said first layer 2 is different from that chosen for the second layer 4, especially with regard to colour and aesthetic aspect with the aim of displaying the pleasant effect of having a predetermined pattern of surface discontinuity.

The non-continuous layer 4 of non-stick material is preferably obtained, as has already been indicated, by silk-screening according to a geometricallly regular pattern, such as a reticule, spots or other graphic elements, or it can be irregular. However, whatever form of application of a second, non-continuous layer 4 of non-stick material on a first uniform and continuous layer can be considered suitable.

According to the invention, the product obtained with the described product is constituted by a metallic or different underlayer 3, pan-shaped, skillet shaped or the like, exhibiting a flat and uniform internal bottom surface, which is destined to come into contact with the food, which bottom surface is covered with discontinuously-developing non-stick material according to areas of greater thickness 5 and areas of lesser thickness 6 arranged according to a predetermined pattern.

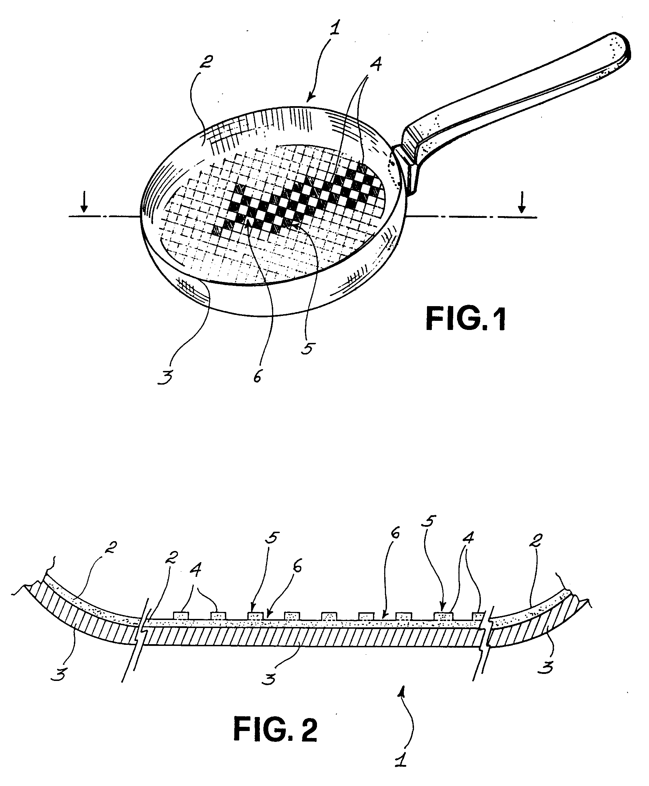

The non-stick material covering is realised (see figure 2) by a first continuous layer and of uniform thickness 2 applied over all of the said internal surface and by a second non-continuous layer 4 of non-stick material which is applied on the said first continuous layer 2 at least limitedly to the central flat and uniform area constituting the bottom of a pan 1.

Preferably the non-stick material constituting the said first layer is of a colour and external aspect which are different for the non-stick material constituting the said second layer, and the first layer is of either a different or equal thickness to the thickness of the said second layer 4.

## Claims

1. A process for realising a non-stick covering on a metallic or other underlayer, in the manufacture of kitchenware for cooking foodstuffs, characterised in that it comprises the following steps:
- application of a first, continuous layer (2) of uniform thickness of non-stick material over all of the surface of the said underlayer (3) destined to come into contact with foodstuffs;
- partial firing of the said continuous first layer (2) at a temperature and for a duration which permit the subsequent attachment and reticular integration of a second non-continuous layer (4) of non-stick material to the continuous first layer (2);
- application of a second non-continuous layer (4) of non-stick material on the said continuous first layer (2), at least limited to a central flat and uniform area of the continuous first layer (2) constituting the bottom of a pan (1);
- a final firing of the non-stick covering layers (2) and (4).

2. A process as in claim 1, characterised in that the said non-continuous layer (4) of non-stick material is applied on the said first continuous layer (2) at least limitedly to a central flat and uniform area constituting the bottom of a pan (1) by means of silk-screening according to a predetermined pattern which determines areas (5) wherein the said second layer is applied and also areas (6) where the said second layer is not applied.

3. A process as in claim 1, characterised in that the said continuous first layer (2) is applied at a thickness comprised between 5 and 50 »m.

4. A process as in claim 1, characterised in that the said non-continuous second layer (4) is applied at a thickness comrised between 5 and 50 »m.

5. A process as in claim 1, characterised in that the non-stick material constituting the said first layer (2) is equal, by composition and physical-chemical characteristics, to the non-stick material constituting the said second layer (4).

6. A process as in claim 1, characterised in that the non-stick material constituting the said first layer (2) is different, by composition and chemical-physical characteristics, from the non-stick material constituting the said second layer (4).

7. A process as in claim 1, characterised in that the non-stick material constituting the said first layer (2) is of a colour which differs from that of the non-stick material constituting the said second layer (4).

8. A product obtained with the process according to the preceding claims, kitchenware for the cooking of foods, characterised in that it is constituted by a metallic or other material underlayer (3), pan-shaped (1), skillet-shaped or the like, exhibiting a flat and uniform central bottom surface, which surface is destined to come into contact with food, and which surface is covered with non-stick material having a discontinuous development according to areas of greater thickness (5) and areas of lesser thickness (6) arranged according to a predetermined pattern.

9. A product as in claim 8, characterised in that the said non-stick material covering is realised from a first continuous layer (2) of uniform thickness applied over all of the internal surface of the said underlayer (3) and by a second, non-continuous layer (4) of non-stick material applied on the said continuous first layer (2) at least limitedly to the flat and uniform central area constituting a pan (1) bottom.

10. A product as in claim 9, characterised in that the non-stick material constituting the said first layer (2) is of a different colour to the non-stick material constituting the said second layer (4).

11. A product as in claim 9, characterised in that the said first layer (2) is of a different thickness to that of the said second layer (4).

12. A product as in claim 9, characterised in that the said first layer (2) is of a thickness which is equal to that of the said second layer (4).

## Patentansprüche

1. Ein Verfahren zur Herstellung eines nichthafenden Belages auf einem metallischen oder anderen Untergrund im Zuge der Herstellung von Küchengeräten zur Zubereitung von Speisen und das durch das Verfahren hergestellte Produkt, dadurch gekennzeichnet, daß es die folgenden Schritte umfaßt:
- Auftragung einer ersten, kontinuierlichen Schicht (2) des Antihaftmaterials mit einer gleichmäßigen Stärke auf der gesamten mit den Lebensmitteln in Kontakt kommenden Oberfläche des genannten Untergrunds (3);
- partielles Hartbrennen der genannten ersten kontinuierlichen Schicht (2) bei einer Temperatur und mit einer Dauer, die eine nachfolgende Befestigung und eine netzartige Integration der ersten kontinuierlichen Schicht (2) mit einer zweiten nicht-kontinuierlichen Schicht (4) eines Antihaftmaterials gestattet;
- die Auftragung einer zweiten nichtkontinuierlichen Schicht (4) von Antihaftmaterial auf der genannten ersten Schicht (2) zumindest auf der mittleren, flachen und uniformen Fläche der kontinuierlichen ersten Schicht (2), die den Boden der Pfanne (1) bildet;
- ein abschließendes Hartbrennen der Antihaftbeschichtungen (2) und (4).

2. Ein Verfahren gemäß Anspruch 1, gekennzeichnet dadurch, daß die genannte nicht-kontinuierliche Schicht (4) eines Antihaftmaterials auf der genannten ersten Schicht (2) mit einem Siebdruckverfahren in dem mittleren, flachen Bereich, der den Boden der Pfanne (1) bildet, aufgetragen wird, wobei ein festgelegtes Muster bestimmt, auf welche Bereiche die zweite Schicht aufgetragen wird und ebenfalls Bereiche (6) bestimmt, auf die die genannte zweite Schicht nicht aufgetragen wird.

3. Ein Verfahren gemäß Anspruch 1, gekennzeichnet dadurch, daß die genannte erste kontinuierliche Schicht (2) in einer Stärke zwischen 5 und 50 »m aufgetragen wird.

4. Ein Verfahren gemäß Anspruch 1, gekennzeichnet dadurch, daß die genannte zweite nichtkontinuierliche Schicht (4) in einer Stärke von 5 und 50 »m aufgetragen wird.

5. Ein Verfahren gemäß Anspruch 1, gekennzeichnet dadurch, daß das Antihaftmaterial, aus dem die genannte erste Schicht (2) besteht, in der Zusammensetzung und den physisch-chemischen Eigenschaften mit dem Antihaftmaterial, aus dem die genannte zweite Schicht (4) besteht, vollkommen identisch ist.

6. Ein Verfahren gemäß Anspruch 1, gekennzeichnet dadurch, daß das Antihaftmaterial, aus dem die genannte erste Schicht (2) besteht, in der Zusammensetzung und den physisch-chemischen Eigenschaften von dem Antihaftmaterial, aus dem die genannte zweite Schicht (4) besteht, verschieden ist.

7. Ein Verfahren gemäß Anspruch 1, gekennzeichnet dadurch, daß das Antihaftmaterial, aus dem die genannte erste Schicht (2) besteht, eine Farbe aufweist, die von der des Haftmaterials abweicht, aus der die genannte zweite Schicht (4) besteht.

8. Ein Küchenwaren-Produkt zum Garen von Lebensmitteln, daß mit einem Verfahren gemäß den vorausgehenden Ansprüchen hergestellt worden ist, dadurch gekennzeichnet, daß es aus einem metallischen oder sonstigen Untergrund (3) mit Pfannenform (1) o. ä. besteht, der in der Mitte eine uniforme, flache Bodenfläche aufweist, die mit den Lebensmitteln in Kontakt kommt, wobei diese Oberfläche in diskontinuierlicher Weise mit einer Antihaftbeschichtung mit Bereichen größerer Stärke (5) und mit Bereichen geringerer Stärke (6) versehen ist, die gemäß einem feststehenden Muster angeordnet sind.

9. Ein Produkt gemäß Anspruch 8, gekennzeichnet dadurch, daß die genannte Antihaftbeschichtung aus einer kontinuierlichen ersten Schicht (2) von gleichmäßiger Stärke besteht, die auf der gesamten inneren Oberfläche des genannten metallischen Untergrunds (3) aufgetragen wird, und aus einer zweiten, nicht-kontinuierlichen Schicht (4) eines Antihaftmaterials, daß zumindest im mittleren, uniformen Bereich, der den Boden der Pfanne (1) bildet, auf der genannten ersten kontinuierlichen Schicht (2) aufgetragen wird.

10. Ein Produkt gemäß Anspruch 9, gekennzeichnet dadurch, daß das Antihaftmaterial, aus dem die genannte erste Schicht (2) besteht, eine Farbe aufweist, die von der des Antihaftmaterials verschieden ist, aus dem die genannte zweite Schicht (4) besteht.

11. Ein Produkt gemäß Anspruch 9; gekennzeichnet dadurch, daß die genannte erste Schicht (2) eine Stärke aufweist, die von der der genannten zweiten Schicht (4) verschieden ist.

12. Ein Produkt gemäß Anspruch 9, gekennzeichnet dadurch, daß die genannte erste Schicht (2) eine Stärke aufweist, die der der genannten zweiten Schicht (4) entspricht.

## Revendications

1. Un procédé pour la formation d'un revêtement non-collant sur une sous-couche métallique ou non-métallique dans la fabrication d'ustensiles de cuisine destinés à la cuisson d'aliments ainsi que le produit ainsi obtenu, caractérisé par le fait qu'il comprend les étapes suivantes:
- l'application d'une première couche continue (2) d'épaisseur uniforme de matériau antiadhésif, sur toute la surface de ladite couche de dessous (3) destinée à être en contact avec les produits alimentaires;
- le chauffage partiel de ladite première couche continue (2) à une température et pendant une durée qui permettent la fixation suivante et l'intégration réticulée à la première couche continue (2) d'une deuxième couche non continue (4) de matériau antiadhésif;
- l'application d'une deuxième couche non continue (4) de matériau antiadhésif sur ladite première couche continue (2), au moins dans les limites de la partie centrale qui est plate et uniforme de la première couche continue (2) et qui constitue le fond d'une casserole (1);
- le chauffage final des couches de revêtement antiadhésif (2) et (4).

2. Un procédé comme celui de la revendication 1, caractérisé par le fait que ladite couche non continue (4) de matériau antiadhésif est appliquée sur ladite première couche continue (2) au moins dans les limites de la partie centrale qui est plate et uniforme et qui constitue le fond d'une casserole (1) au moyen du procédé sérigraphique suivant un modèle déterminé d'avance qui détermine les parties (5) où ladite deuxième couche est appliquée, et aussi les parties (6) où ladite deuxième couche n'est pas appliquée.

3. Un procédé comme celui de la revendication 1, caractérisé par le fait que ladite première couche continue (2) est appliquée avec une épaisseur qui est comprise entre 5 et 50 »m.

4. Un procédé comme celui de la revendication 1, caractérisé par le fait que ladite deuxième couche non continue (4) est appliquée avec une épaisseur qui est comprise entre 5 et 50 »m.

5. Un procédé comme celui de la revendication 1, caractérisé par le fait que le matériau antiadhésif qui constitue ladite première couche (2) est égal, par sa composition et par ses caractéristiques physiques et chimiques, au matériau antiadhésif qui constitue ladite deuxième couche (4).

6. Un procédé comme celui de la revendication 1, caractérisé par le fait que le matériau antiadhésif qui constitue ladite première couche (2) est différent, par sa composition et par ses caractéristiques chimiques et physiques, du matériau antiadhésif qui constiue ladite deuxième couche (4).

7. Un procédé comme celui de la revendication 1, caractérisé par le fait que le matériau antiadhésif qui constitue ladite première couche (2) est d'une couleur qui diffère de celle du matérau antiadhésif qui constitue ladite deuxième couche (4).

8. Un produit obtenu grâce au procédé suivant les revendications précédentes, c'est-à-dire des ustensiles de cuisine servant à la cuisson des aliments, caractérisé par le fait qu'il est constitué par une couche de dessous en métal ou en un autre matériau (3), qui a la forme d'une casserole (1), d'une poêle, ou d'un autre ustensile de ce genre, qui présente au fond une surface centrale qui est plate et uniforme, laquelle surface est destinée à être en contact avec les aliments, et laquelle surface est recouverte d'un matériau antiadhésif qui a un développement discontinu suivant des parties de plus grosse épaisseur (5) et des parties de plus petite épaisseur (6) disposées suivant un modèle déterminé d'avance.

9. Un produit comme celui de la revendication 8, caractérisé par le fait que ledit revêtement en matériau antiadhésif est réalisé d'abord par une première couche continue (2) d'une épaisseur uniforme appliquée sur toute la surface interne de ladite couche de dessous (3) et ensuite par une deuxième couche non continue (4) d'un matériau antiadhésif appliquée sur ladite première couche continue (2) au moins dans les limites de la partie centrale qui est plate et uniforme et qui constitue le fond de la casserole (1).

10. Un produit comme celui de la revendication 9, caractérisé par le fait que le matériau antiadhésif qui constitue ladite première couche (2) est d'une couleur différente de celle du matériau antiadhésif qui constitue ladite deuxième couche (4).

11. Un produit comme celui de la revendication 9, caractérisé par le fait que ladite première couche (2) est d'une épaisseur différente de celle de ladite deuxième couche (4).

12. Un produit comme celui de la revendication 9, caractérisé par le fait que ladite première couche (2) est d'une épaisseur qui est égale à celle de ladite deuxième couche (4).
